Europäisches Patentamt

European Patent Office

Office européen des brevets

(11) Numéro de publication: **0 273 296 B1**

# (12) FASCICULE DE BREVET EUROPEEN

(45) Date de publication de fascicule du brevet:
13.03.91

(51) Int. Cl.5: **G01N 21/11, G01N 35/08**

(21) Numéro de dépôt: **87118591.4**

(22) Date de dépôt: **15.12.87**

(54) **Appareil pour l'analyse photométrique d'échantillons liquides.**

(30) Priorité: **24.12.86 FR 8618255**

(43) Date de publication de la demande:
**06.07.88 Bulletin 88/27**

(45) Mention de la délivrance du brevet:
**13.03.91 Bulletin 91/11**

(84) Etats contractants désignés:
**AT BE CH DE ES FR GB GR IT LI LU NL SE**

(56) Documents cités:
**DE-A- 1 673 345**
**US-A- 3 799 683**

**PATENT ABSTRACTS OF JAPAN, vol. 6, no.
121 (P-126)[999], 6 juillet 1982, page 153 P
126; & JP-A-59 49 843**

**PATENT ABSTRACTS OF JAPAN, vol. 6, no.
59 (P-110)[937], 16 avril 1982, page 165 P 110;
& JP-A-57 30 30**

**PATENT ABSTRACTS OF JAPAN, vol. 1, no.
103 (E-77)[3194], 13 septembre 1978, page
3194 E 77; & JP-A-52 34 774**

(73) Titulaire: **Nivarox-FAR S.A.**
**Avenue du Collège 10**
**CH-2400 Le Locle(CH)**

(72) Inventeur: **Meyrat, Pierre-André**
**Rue D.-P. Bourquin 5**
**CH-2300 La Chaux-de-Fonds(CH)**
Inventeur: **Oppliger, Alain**
**Avenue L.-Robert 136**
**CH-2300 La Chaux-de-Fonds(CH)**
Inventeur: **Steiner, Denis**
**Rue de la Clé 47**
**CH-2610 St-Imier(CH)**

(74) Mandataire: **Caron, Gérard et al**
**ICB Ingénieurs Conseils en Brevets SA Passage Max. Meuron 6**
**CH-2001 Neuchâtel(CH)**

## Description

La présente invention est relative a un appareil pour l'analyse photométrique d'échantillons liquides.

L'analyse successive d'une grande quantité d'échantillons liquides se heurte à une difficulté qui consiste à éviter que le mesure en cours soit perturbée par les résidus qui sont restés dans l'appareil après l'exécution de la mesure de l'échantillon précédent. Par exemple, la concentration ou la composition d'un échantillon peut être modifiée par ces résidus et donner une erreur au niveau du résultat de la mesure. Il en est ainsi notamment dans les appareils qui mesurent les propriétés des échantillons par photométrie.

Dans un appareil connu de cette dernière catégorie, vendu sous la référence XP-2000 par la Société SKAN AG, CH-4009 Basel-Allschwil, la mesure photométrique est réalisée alors que l'échantillon se trouve dans une chambre isolée de la lumière ambiante. Cette chambre est délimitée dans une plaque qui est vissée sur la face avant d'un boîtier contenant notamment un photomultiplicateur et les circuits électroniques appropriés chargés de traduire le signal fourni par le photomultiplicateur en une information exploitable par l'utilisateur. L'appareil en question est destiné typiquement à la mesure de la bioluminescence provoquée par réaction d'une enzyme sur un échantillon liquide dans lequel se trouve mélangée une certaine quantité d'organismes vivants tels que des bactéries. Cependant, des difficultés tout-à-fait semblables peuvent être rencontrées lorsque l'on souhaite analyser un liquide en mesurant par exemple sa transparence vis-à-vis de la lumière. Le photomultiplicateur sert alors par exemple à mesurer la lumière qui lui parvient à travers le liquide en provenance d'une source de lumière placée en regard du photomultiplicateur.

Il est à noter que l'on trouve une description détaillée du processus d'analyse par bioluminescence dans un article de N. Maire dans la revue "Soil Biol. Biochem." volume 16, no 4, page 361 à 366, 1984. En résumé, il s'agit de l'analyse d'un milieu, tel que le sol, qui consiste à extraire la molécule ATP des cellules du milieu par rupture des parois cellulaires, puis à effectuer la mesure photométrique de la molécule par une réaction enzymatique de bioluminescence, l'intensité de la lumière émise au cours de cette réaction étant directement proportionnelle à la concentration de l'ATP, concentration qui est elle-même représentative de l'activité biologique de l'échantillon de sol examiné. En effet, l'ATP est un mononucléotide du métabolisme que l'on retrouve dans tous les organismes vivants et qui assure la transmission ou la mise en réserve d'énergie dans la plupart des réactions biochimiques se déroulant au sein des cellules vivantes (respiration, fermentation, photosynthèse, etc).

Quoi qu'il en soit, pour obtenir une évaluation fidèle de la bioluminescence, il faut éviter soigneusement la contamination d'un échantillon en cours d'analyse par un échantillon qui vient d'être analysé.

Dans l'appareil connu évoqué ci-dessus, on parvient à satisfaire cette exigence en rinçant la cellule de mesure avec un liquide de rinçage. Mais pour ce faire, il faut démonter la plaque de montage de la cellule, en enlever la cellule, rincer cette dernière puis remonter l'ensemble. C'est dire que cette méthode ne se prête pas au traitement rapide et automatique d'un grand nombre d'échantillons. D'autres appareils de l'état de la technique sont montrés dans US-A-3799683 et DE-A-1673345.

L'invention a pour but de fournir un appareil d'analyse photométrique du type décrit ci-dessus, mais adapté au traitement successif automatique d'un grand nombre d'échantillons sans que les échantillons puissent mutuellement perturber les résultats d'analyse obtenus.

L'invention a donc pour objet un tel appareil d'analyse qui comporte une cellule de mesure disposée dans une enceinte étanche à la lumière et destinée à recevoir successivement les échantillons de liquide, un détecteur photométrique placé près de la cellule de mesure pour capter un signal lumineux représentatif d'une propriété de l'échantillon et un dispositif d'exploitation de la mesure connecté audit détecteur pour convertir le signal fourni par celuici en une information visualisable représentant ladite propriété, caractérisé en ce que ladite cellule est insérée dans un circuit d'écoulement de liquide d'échantillon qui comprend des moyens de prélèvement successif des échantillons, une pompe raccordée entre ces moyens de prélèvement et ladite cellule et un dispositif de tropplein associé à cette cellule, le volume de ladite cellule de mesure étant au plus égal au volume de liquide de chaque échantillon à analyser.

Il en résulte de ces caractéristiques, que le rinçage de la cellule de mesure peut être réalisé en y faisant passer l'échantillon jusqu'à ce qu'il y ait un débordement par le trop plein, après quoi il est certain qu'il ne reste dans la cellule plus aucune trace de l'échantillon analysé précédemment. Ainsi, il suffit de remplir la cellule de mesure et de déclencher la mesure une fois le remplissage effectué. Bien entendu, il sera avantageux de disposer de quantités d'échantillon successives nettement supérieures à celle strictement nécessaire pour le remplissage de la cellule de mesure, ce qui permet de faire durer le rinçage un certain temps et d'améliorer le résultat de ce rinçage.

On comprend donc que le processus d'analyse peut ainsi être automatisé car la cellule de mesure peut rester branchée dans le circuit d'écoulement de liquide. Par ailleurs, il n'est nécessaire de prévoir ni liquide de rinçage spécial, ni soupapes et canalisations spéciales pour l'introduire dans la cellule ou l'en évacuer.

L'invention sera mieux comprise à l'aide de la description qui va suivre d'un exemple de réalisation de l'invention.

Aux dessins annexés, donnés uniquement à titre d'exemple:
- la figure 1 est un schéma simplifié d'un appareil d'analyse photométrique suivant l'invention, dont la capsule de mesure est représentée en coupe;
- la figure 2 est une vue en coupe suivant la ligne II-II de la figure 1;
- les figures 3a et 3b illustrent le fonctionnement de l'appareil d'analyse suivant l'invention.

L'exemple de réalisation représenté aux dessins concerne l'analyse photométrique d'échantillons liquides dans lesquels on déclenche une réaction de bioluminescence du type évoqué ci-dessus. Une telle analyse nécessite la mesure de la luminescence engendrée par l'échantillon au moment où celui-ci est mélangé à une enzyme. Cette mesure peut dont être effectuée par un photomultiplicateur qui détecte cette luminescence. Toutefois, l'invention n'est pas limitée à ce seul exemple et peut être appliquée pour d'autres mesures optiques effectuées sur des échantillons successifs, telles que par exemple une mesure spectroscopique ou une mesure par transparence, par réflexion, par dispersion ou autre. Dans ce cas, l'appareil doit comporter une source lumineuse capable de coopérer avec le photomultiplicateur par l'intermédiaire du milieu liquide à analyser.

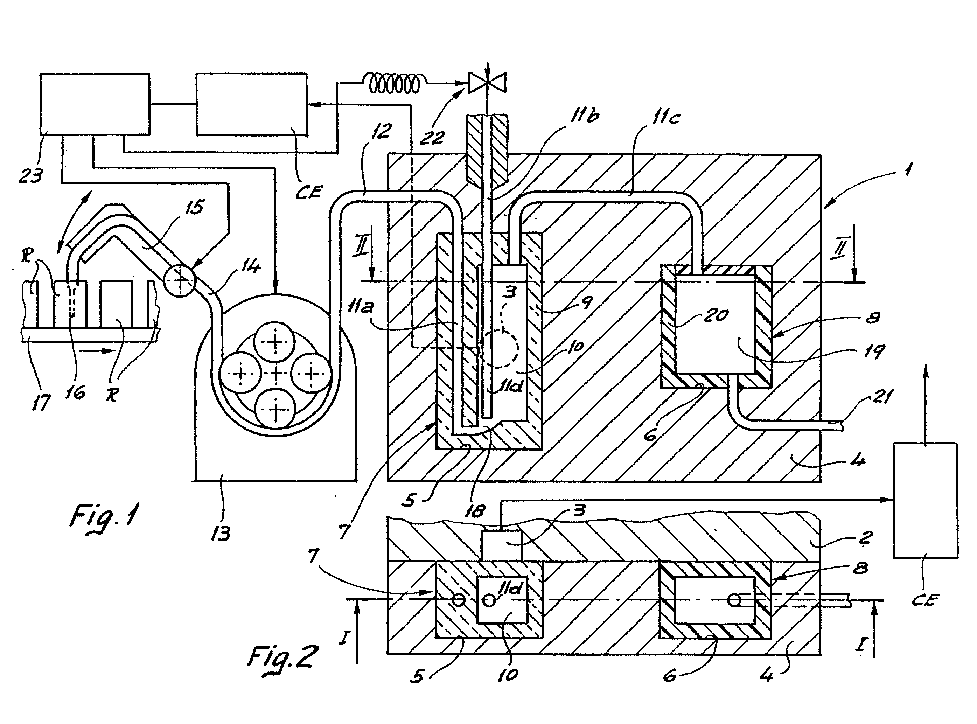

L'appareil d'analyse représenté aux figures 1 et 2 comprend une capsule de mesure 1 qui est fixée contre la paroi avant d'un boîtier 2 contenant notamment un photomultiplicateur 3 et un circuit d'exploitation CE raccordé à ce photomultiplicateur et capable de fournir un signal représentatif de la quantité de lumière captée par ce composant au cours de chaque cycle de traitement d'un échantillon. Le boîtier 2 contenant le circuit d'exploitation CE peut être celui vendu sous la référence XP-2000 par la Société SKAN AG, CH-4009 Basel-Allschwil.

La capsule de mesure 1 comprend une plaque métallique rigide 4 vissée sur le boîtier 2 d'une manière garantissant l'étanchéité à la lumière. La plaque 4 présente deux cavités 5 et 6 dans lesquelles sont logées respectivement une cellule de mesure 7 et une cellule 8 d'évacuation de l'échantillon analysé.

La cellule de mesure 7 est formée par un bloc creux 9 en une matière transparente définissant une chambre 10. Trois canalisations 11a, 11b et 11c débouchent dans cette chambre 10. La canalisation 11a est ménagée directement dans le bloc 9 et communique à travers un tuyau 12 avec une pompe 13 de type péristaltique, par exemple. Celle-ci est raccordée par une canalisation 14 à un bras pivotant 15 qui supporte une pipette 16. Le bras 15 pivote sur un support fixe (non représenté) monté sur un bâti (non représenté) de l'appareil d'analyse. Ainsi, la pipette 16 peut plonger successivement dans une série de récipients R d'échantillons qui y ont été versés après une préparation appropriée. Les récipients R sont placés sur un support 17 déplacable pas à pas (bande convoyeuse, carrousel ou analogue) entraîné convenablement. Ainsi, la pipette 16 peut aspirer les échantillons des récipients R qui défilent devant lui. Le bras est en outre agencé pour verser du liquide dans une évacuation (non représentée) prévue à côté du support 17 après avoir pivoté dans un plan horizontal.

La canalisation 11b communique avec un embout de tube 11d qui descend dans la chambre 10 pour déboucher près de l'extrémité de la canalisation 11a. Au voisinage de cette extrémité, la paroi de la chambre 10 présente un alvéole de tourbillonnement 18.

La canalisation 11c constitue un trop-plein pour la cellule 7 et est ménagée dans le corps de la plaque rigide 4. Elle débouche dans une chambre anti-retour 19 délimitée par un bloc creux 20 qui est logé dans la cavité 6 de la plaque. La chambre anti-retour 19 est raccordée à l'évacuation par l'intermédiaire d'une canalisation 21 creusée dans la plaque.

Il est à noter que la pompe péristaltique 13 est réversible afin de permettre l'évacuation de la chambre de mesure 10.

Dans le mode de réalisation de l'invention représentée aux figures, la canalisation 11b est destinée à l'introduction d'une enzyme dans l'échantillon pour y créer la réaction de bioluminescence. Pour commander cette introduction, 1a canalisation 11b est raccordée à une soupape 22 commandée par une unité de commande 23 de l'appareil d'analyse. La soupape 22 est raccordée à son tour à un réservoir de substance enzymatique (non représenté).

La réaction de bioluminescence ne nécessite que très peu de liquide échantillon, en une quantité bien inférieure à celle qui est contenue dans les récipients R. On peut donc utiliser l'échantillon lui-même pour débarrasser le circuit d'écoulement et la cellule de mesure, des résidus de l'échantillon analysé précédemment. Le temps d'écoulement nécessaire pour que le rinçage de ce circuit soit suffisant, peut facilement être déterminé car il correspond à un certain temps de fonctionnement de la pompe péristaltique 13. Il suffit donc de déclencher l'introduction de l'enzyme dans la cellule de mesure à un instant prédéterminé situé à la fin de ce temps pour être certain que la mesure s'effectue bien sur un échantillon non pollué par l'échantillon précédent. En d'autres termes, la soupape 22 doit être ouverte à cet instant pendant que la pompe continue à fonctionner encore pendant un certain intervalle, ce qui provoque, grâce à la cavité de tourbillonnement 18 située au voisinage de la sortie du tube 17, un mélange intime de l'échantillon et de l'enzyme. Le trop-plein de liquide est évacué à travers la chambre 19.

La réaction de l'enzyme sur l'échantillon provoque dans le liquide contenu dans la chambre de mesure 10, l'apparition très brusque d'une certaine quantité de lumière en fonction de la quantité d'ATP libérée dans l'échantillon. Cette quantité de lumière est mesurée par le photomultiplicateur 3 qui génère un signal de mesure traité dans le circuit d'exploitation CE. Ce dernier transmet les données ainsi recueillées vers l'unité de commande 23.

Le fonctionnement de l'appareil d'analyse est le suivant.

Les récipients R sont remplis de liquide échantillon par exemple de matière biologique préparée pour la réaction de bioluminescence. Ils sont placés sur la convoyeuse 17 qui est entraînée pas à pas de manière que les récipients viennent successivement se placer sous le bras 15. Après chaque mesure, le bras 15 refoule le liquide d'une précédente analyse dans une évacuation située à côté de la convoyeuse 17, par l'intermédiaire de la pompe 13.

La pipette 16 est introduite dans un nouveau récipient R (figure 3a) et la pompe 13 est mise en marche pour remplir la chambre 10 de la cellule de mesure 7 jusqu'à remplissage complet et même le débordement complet de celle-ci. Le trop-plein de liquide passe dans la canalisation 11c vers la chambre 19. La circulation du liquide est maintenue jusqu'à ce que les traces de l'échantillon précédent soient éliminées ce qui peut facilement être obtenu en faisant tourner la pompe 13 pendant un temps suffisant déterminé par l'unité de commande 23. Ce temps étant écoulé, l'unité de commande ouvre la soupape 22 pour introduire dans la cellule 7 une certaine quantité de solution enzymatique. Celle-ci est mélangée intimement avec le liquide échantillon qui est alors débarrassé de toute trace de l'échantillon précédent. Dans le cas de la bioluminescence, l'introduction de l'enzyme provoque la génération brusque d'un éclat lumineux qui est transformé en un signal électrique par le photomultiplicateur 3 pour permettre la formation d'une information visualisable. Dans d'autres types de mesure photométriques, le processus de mesure peut être déclenché électroniquement par exemple, une fois la cellule de mesure débarrassée des résidus de l'échantillon précédent.

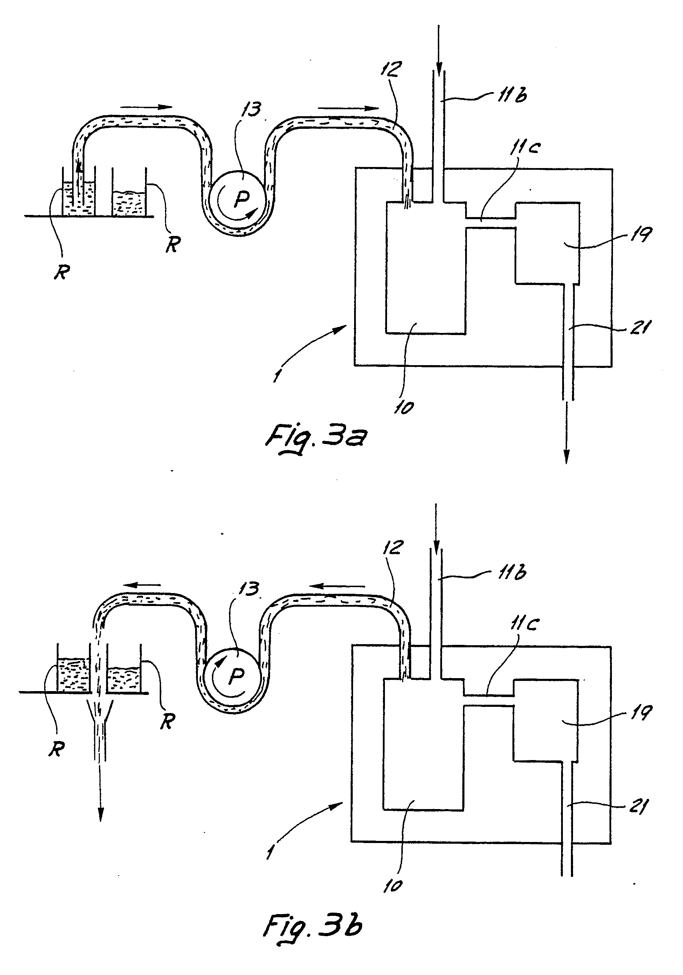

Après la mesure, la cellule 7 est vidée de son contenu par inversion du sens de marche de la pompe 13 (figure 3b), la chambre 19 évitant tout retour du liquide vers la cellule de mesure en provenance de l'évacuation 21.

On voit donc que, sous la commande de l'unité 23, l'ensemble des opérations peut être automatisé et que tout risque de contamination d'un échantillon sur l'autre est évité par un rinçage du circuit de circulation de liquide par l'échantillon qui va être soumis à la mesure.

## Revendications

1. Appareil pour l'analyse photométrique successive d'échantillons liquides, qui comporte une cellule de mesure (7) disposée dans une enceinte (5) étanche à la lumière et destinée à recevoir successivement les échantillons de liquide, un détecteur photométrique (3) placé près de la cellule de mesure (7) pour capter un signal lumineux représentatif d'une propriété de l'échantillon et un dispositif (CE, 23) d'exploitation de la mesure connecté audit détecteur pour convertir le signal fourni par celui-ci en une information visualisable représentant ladite propriété, ladite cellule (7) étout insérée dans un circuit d'écoulement de liquide d'échantillon qui comprend des moyens (15, 16) de prélèvement successif des échantillons, une pompe (13) raccordée entre ces moyens de prélèvement et ladite cellule (7) et un dispositif de trop-plein (8, 11c, 21) associé à celle-ci, le volume de ladite cellule de mesure étant au plus égal au volume de liquide de chaque échantillon à analyser.

2. Appareil suivant la revendication 1, caractérisé en ce qu'il comprend des moyens (11b, 17, 22) pour déclencher le signal lumineux dans ladite cellule de mesure (7) après son remplissage complet ou son débordement par le dispositif de trop-plein (8, 11c, 21).

3. Appareil suivant la revendication 2, caractérisé en ce que lesdits moyens de déclenchement comprennent une canalisation (11b, 11d) plongeant dans la cellule de mesure (7) et raccordée à un dispositif d'introduction commandée d'une substance dans la cellule capable d'y déclencher une réaction provoquant le signal lumineux.

4. Appareil suivant la revendication 3, caractérisé en ce que ladite réaction est une réaction de bioluminescence et en ce que ladite substance est une solution enzymatique.

5. Appareil suivant l'une quelconque des revendications 3 et 4, caractérisé en ce que la canalisation (11c, 11d) de substance de réactions débouche près d'un alvéole (18) pratiqué dans la paroi de la cellule et en ce que la cellule (7) comprend également une canalisation (11a) débouchant près de cet alvéole (18) et servant à l'introduction du liquide échantillon à analyser.

6. Appareil suivant l'une quelconque des revendications précédentes, caractérisé en ce que ladite cellule de mesure (7) est ménagée dans une capsule (1) se présentant sous la forme d'une plaque rigide (4) dans laquelle sont ménagées une première cavité (5) pour loger la cellule de mesure (7) et une seconde cavité (6) en communication avec la cellule de mesure (7) et avec une évacuation (21) pour empêcher tout refoulement vers la cellule de mesure (7) lorsque celle-ci est vidée de son contenu par ladite pompe (13).

7. Appareil suivant la revendication 6, caractérisé en ce que ladite capsule (1) est agencée pour être montée sur un boîtier (2) contenant ledit détecteur photométrique (3) ainsi que ledit dispositif d'exploitation (CE, 23).

## Claims

1. Apparatus for photometrically analysing successive liquid samples, which comprises a measurement cell (7) disposed in a light-proof enclosure (5) and adapted to successively receive the liquid samples, a photo-metric detector (3) near the measurement cell (7) to receive a light signal representing a property of each sample and measurement processing means (CE, 23) connected to said detector to convert the signal supplied by the detector into data providing a visual representation of said property, said measurement cell (7) being in a flow circuit for successive liquid samples which comprises means (15, 16) for successively taking in said samples, a pump (13) connected between said latter and said measurement cell (7) and overflow means (8, 11c, 21) associated with said cell, the volume of said measurement cell being at most equal to the volume of liquid of each sample having to be analysed.

2. Apparatus according to claim 1, characterized in that it comprises means (11b, 17, 22) for triggering the light signal in said measurement cell (7) after it has been completely filled or when there is an overflow into overflow means (8, 11c, 21).

3. Apparatus according to claim 2, characterized in that said triggering means comprise a duct (11b, 11d) extending into the measurement cell (7) and connected to a device for controlled addition to the cell of a substance able to trigger a reaction producing the light signal.

4. Apparatus according to claim 3, characterized in that said reaction is a bioluminescence reaction and in that said substance is an enzymatic solution.

5. Apparatus according to any one of claims 3 and 4, characterized in that the duct (11c, 11d) for the reaction substance terminates adjacent a recess (18) in the cell wall and in that the cell (7) comprises a duct (11a) opening near to said recess (18) and serving to deliver the liquid sample to be analysed.

6. Apparatus according to any one of the preceding claims, characterized in that said measurement cell (7) is in a capsule (1) in the form of a rigid plate (4) in which are provided a first cavity (5) to accommodate the measurement cell (7) and a second cavity (6) communicating with the measurement cell (7) and with an evacuation arrangement to prevent any flow back into the measurement cell (7) when the contents thereof are emptied by said pump (13).

7. Apparatus according to claim 6, characterized in that said capsule (1) is mounted on a casing (2) containing said photometric detector (3) as well as said processing means (CE, 23).

## Ansprüche

1. Gerät für die sukzessive photometrische Analyse von flüssigen Proben, das eine Meßzelle (7) umfaßt, angeordnet in einem lichtdichten Raum (5) und bestimmt zur sukzessiven Aufnahme der flüssigen Proben, einen photometrischen Detektor (3) umfaßt, der nahe der Meßzelle (7) plaziert ist zum Auffangen eines Lichtsignals, das repräsentativ ist für eine Eigenschaft der Probe, und eine Auswertevorrichtung (CE, 23) der Messung umfaßt, angeschlossen an den Detektor zum Umsetzen des von diesem gelieferten Signals in eine visualisierbare Information, die die genannte Eigenschaft repräsentiert, wobei die Zelle (7) in einen Flüssigkeitsströmungskreislauf der Probe eingefügt ist, der Mittel (15, 16) der sukzessiven Probenahme umfaßt, eine zwischen die Probenahmemittel und die Zelle (7) geschaltete Pumpe (13) umfaßt sowie eine UbPrlaufeinrichtung (8, 11c, 21), jenen zugeordnet, umfaßt, wobei das Volumen der Meßzelle höchstens gleich dem Flüssigkeitsvolumen jeder zu analysierenden Probe ist.

2. Gerät nach Anspruch 1, dadurch gekennzeichnet, daß es Mittel (11b, 17, 22) umfaßt zum Auslösen des Lichtsignals in der Meßzelle (7) nach deren vollständigen Füllung oder deren Uberlaufen über die Uberlaufeinrichtung (8, 11c, 21).

3. Gerät nach Anspruch 2, dadurch gekennzeichnet, daß die Auslösemittel einen Kanal (11b, 11d) umfassen, der in die Meßzelle (7) mündet und mit einer Vorrichtung zum gesteuerten Einführen einer Substanz in die Zelle verbunden ist, die dort eine Reaktion auslösen kann, welche das Lichtsignal hervorruft.

4. Gerät nach Anspruch 3, dadurch gekennzeichnet, daß die Reaktion eine Biolumineszenzreaktion ist und daß die Substanz eine enzymatische Lösung ist.

5. Gerät nach einem der Ansprüche 3 und 4, dadurch gekennzeichnet, daß der Kanal (11c, 11d) der Reaktionssubstanz nahe einer Alveole (18) mündet, eingearbeitet in die Wandung der Zelle und daß die Zelle (7) ferner einen Kanal (11a) umfaßt, der nahe der Alveole (18) mündet und der Einspeisung der zu analysierenden Flüssigkeitsprobe dient.

6. Gerät nach einem der vorangehenden Ansprüche, dadurch gekennzeichnet, daß die Meßzelle (7) in einer Kapsel (1) ausgebildet ist, die sich in Form einer starren Platte (4) darstellt, in welche ein erster Hohlraum (5) für die Aufnahme der Meßzelle (7) und ein zweiter Hohlraum (6) in Kommunikation mit der Meßzelle (7) und mit einer Entleerung (21) eingearbeitet sind zum Verhindern jeglicher Rückströmung zu der Meßzelle (7), wenn diese mittels der Pumpe (13) von ihrem Inhalt geleert wird.

7. Gerät nach Anspruch 6, dadurch gekennzeichnet, daß die Kapsel (1) ausgebildet ist zum montiert werden auf einem Gehäuse (2), welches den photometrischen Detektor (3) sowie die Auswerteeinrichtung (CE, 23) enthält.

Fig. 3a

Fig. 3b